# EUROPEAN PATENT SPECIFICATION

(11) **EP 3 991 897 B1**
(45) Date of publication and mention of the grant of the patent: **01.01.2025**
(21) Application number: 20205128.0
(22) Date of filing: 02.11.2020
(51) Int. Cl.: B23D 47/04, B27B 9/04

(54) **RAISABLE CARRIAGE FOR POSITIONING AN OBJECT TO BE CUT**
ERHÖHBARE WAGEN FÜR DIE POSITIONIERUNG EINES ZU SCHNEIDENDEN OBJEKTS
CHARIOT RELEVABLE POUR POSITIONNER UN OBJET À COUPER

(43) Date of publication of application: 04.05.2022
(73) Proprietor: The Stanley Works Israel Ltd., 48091 Rosh Ha'Ayin (IL)
(72) Inventor: OMRY, Adar, Hertzeliya (IL); WAISSENGREEN, Ohad, 76842 Emek Sorek (IL); RAN, Amit, 7683976 Mazkeret Batya (IL); YONA, Nir, Rehovot (IL); KEINAN, Yuval, 5252466 Ramat-Gan (IL)
(74) Representative: SBD IPAdmin

(56) References cited:
- EP-A2- 1 275 476
- CN-A- 109 128 364
- CN-U- 205 763 027
- US-A- 5 327 653
- US-A- 5 526 856
- US-A- 5 836 365
- US-A1- 2011 056 344

## Description

### FIELD OF THE INVENTION

This disclosure deals with a carriage for adjusting a position of an object to be cut by a cutting device.

### STATE OF THE ART

Systems comprising a cutting device, a track and a carriage slidably mounted on the track are known. The carriage can be moved at different distances from the cutting device. The carriage is used as a support for an object to be cut by the cutting device. The object is cut while it rests simultaneously on the carriage and on a platform of the cutting device. One such device can be found in Chinese Patent 109128364B discloses a processing robot for cutting stainless steel tubes. The disclosed device includes a bottom plate, a conveying device, a feeding device, a sleeve type fixing device, a cutting device and a cleaning device. According to the disclosure, the device permits the safe and clean cutting of stainless steel tubes.

EP 1275476 discloses a carriage according to the preamble of claim 1, and in particular a portable work bench, which includes a beam supported by legs, and at least one bracket for supporting a power tool and a workpiece.

In some systems, the cutting device is releasably mounted on the track. Thus, it can be replaced by another cutting device one having a different structure or size. However, after this replacement, an object to be cut resting simultaneously on a platform of the new cutting device and the carriage may not be perfectly level. As a consequence, the object may be cut inaccurately.

### SUMMARY OF THE INVENTION

An aim of the present disclosure is to correctly position an object to be cut in relation to a first cutting system, and in relation to a second cutting system of different size and replacing the first cutting system.

According to the invention, there is provided a carriage according to claim 1.

### DESCRIPTION OF THE FIGURES

Further details, features and advantages of the invention are explained in more detail below with the aid of the exemplary embodiments of the invention that are illustrated in the figures in which:
- Figure 1 is a perspective view of a track and of a carriage, according to an embodiment.
- Figure 2 is a side view of a system for cutting an object at a desired length.
- Figure 3 is a side perspective view of the carriage of figure 1.
- Figures 4a and 4b are side views showing a scissor mechanism included in the carriage of figures 1 and 3.
- Figure 5 is a side view showing a ratchet included in the carriage of figures 1 and 3 and in an engaged configuration.
- Figure 6 is a perspective view detailing some parts of the ratchet shown in figure 5.
- Figure 7 is a side view showing the ratchet of figure 5 in a disengaged configuration.

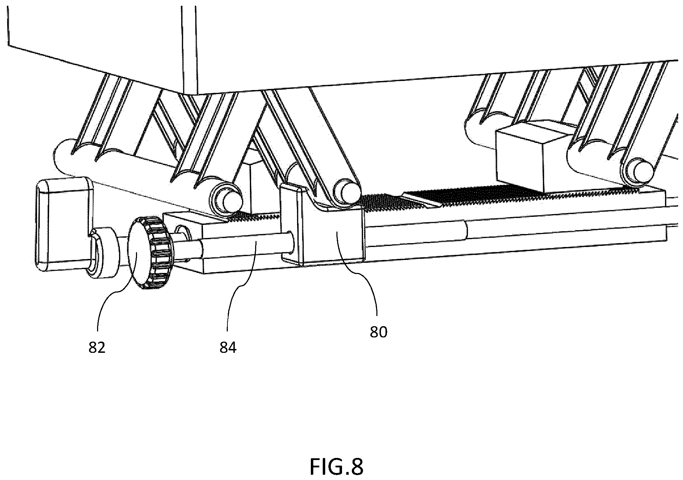

- Figure 8 is a side view showing other components included in the carriage of figure 1.
- Figure 9 is a further view of the carriage of figure 1.

### DETAILED DESCRIPTION OF AT LEAST ONE EMBODIMENT

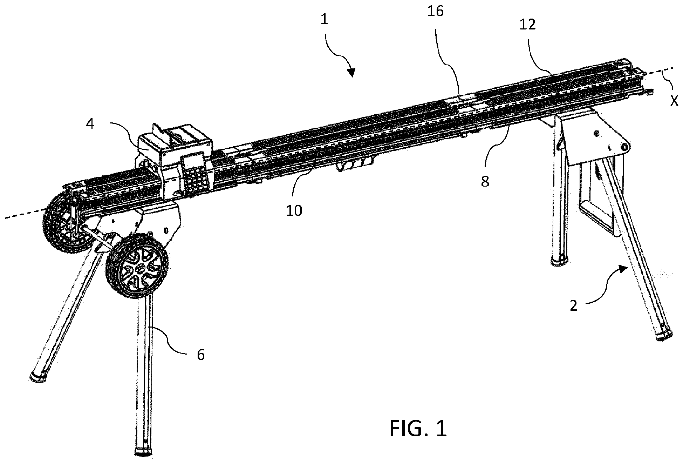

In reference with **figure 1****,** a system 1 according to an embodiment comprises a stand 2 and a carriage 4.

The stand 2 is for example a sawhorse. The stand 2 comprises a plurality of legs 6, for example two pairs of legs 6.

The stand 2 further comprises a track 8 extending along a longitudinal axis X. Longitudinal axis X is horizontal when the legs support the stand 2.

The track 8 comprises two longitudinal grooves 10 parallel to axis X. The two longitudinal grooves 10 are opposite to each other.

The track 8 further comprises a linear rack 12 extending in one of the longitudinal grooves 10.

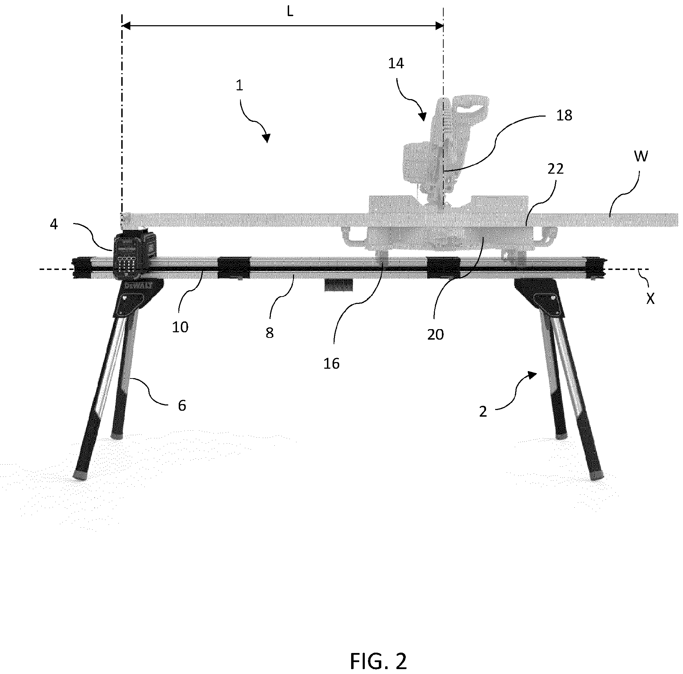

In reference with **figure 2****,** the system 1 may further comprise a cutting device 14. The cutting device may be releasably mounted on the stand 2 by means of fasteners 16.

The cutting device 14 comprises a saw 18, for example a circular saw, and a cutting platform 20 for supporting an object W to be cut by the saw 18. The cutting platform 20 defines an upper surface 22 on which the object W to be cut by the saw 18 can rest. When the cutting device 14 is mounted on the stand 2, the saw 18 is oriented to cut an object W in a cutting plane perpendicular to longitudinal axis X. The saw 18 can moved in this cutting plane away from and towards upper surface 22.

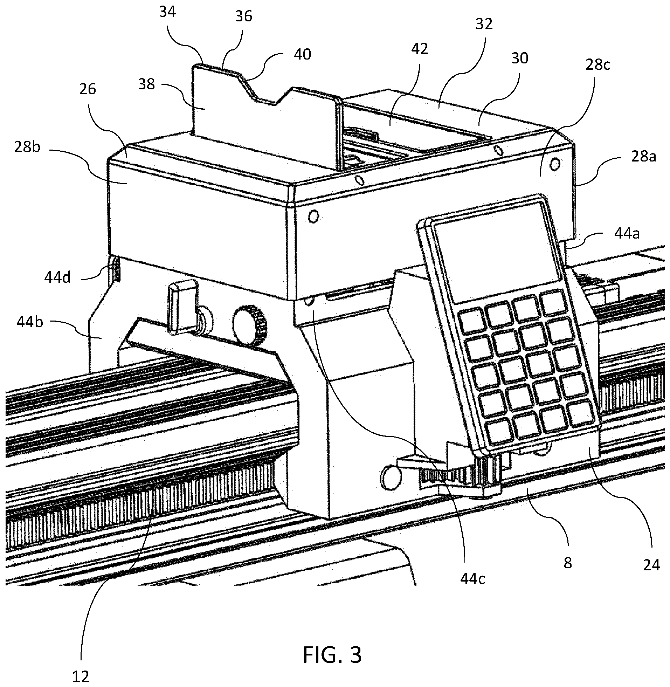

In reference with **figure 3****,** the carriage 4 comprises a housing 24 able to be slidably mounted on the track 8.

The carriage 4 comprises a platform 26 on which can rest an object W to be cut by the cutting device 14 mounted on the track 8. The housing 24 extends between the platform 26 and the track 8, when the housing 24 is slidably mounted on the track 8.

The platform 26 comprises four side panels 28a-d, including two side panels 28a, 28b perpendicular to longitudinal axis X and two other side panels 28c, 28d parallel to longitudinal axis X, when the housing 24 is slidably mounted on the track 8.

The platform 26 further comprises a top panel 30 connected to each of the four side panels 28a-d. The top panel 30 defines an upper surface 32 of the carriage 4 on which an object W to be cut by the cutting device 14 can rest.

The carriage 4 comprises a stop 34 able to stop an object W relative to the cutting device 14 while the object W rests on the upper surface 32.

The stop 34 is able to be set in a deployed position wherein the stop 34 protrudes from the platform 26, so as to stop the object relative to the cutting device 14 while the object rests on the platform 26, and in a retracted position wherein the stop 34 is retracted in the platform 26 and cannot stop the object.

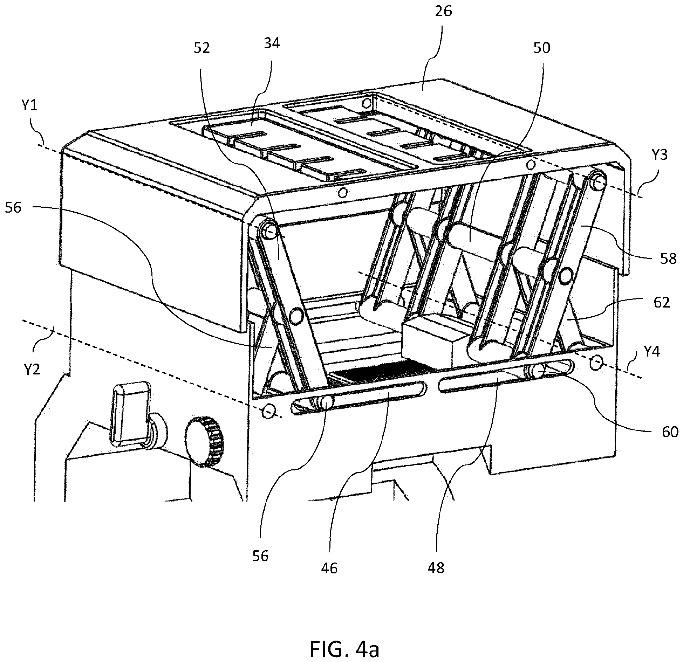

The stop 34 preferably comprises a flap 36 pivotally mounted on the platform 26 between a standing position wherein the flap 36 is perpendicular to the platform 26 (as shown in **figure 3****),** and a lying position wherein the flap lies along the platform (as shown in **figure 4a****).**

The flap 36 pivots relative to the platform 26 about a transverse axis perpendicular to longitudinal axis X, when the carriage 4 is slidably mounted on the track 8.

The flap 36 has an outer surface 38 and an inner surface 40 opposite to the inner surface. Both surfaces 38, 40 are planar.

In the lying position, the outer surface 38 is flush with the upper surface 32, while the inner surface 40 is invisible. In the standing position, both surfaces 38, 40 are perpendicular to longitudinal axis X.

The carriage 4 further comprises a second stop 42. The second stop 42 has the same features as stop 34 (including a pivotally mounted flap having an inner surface and an outer surface opposite to the inner surface). When both flaps 34, 42 are in their standing position, the inner surfaces of the two stops face each other. In figure 3, the stop 34 is in its standing position, while the other stop 42 is in its lying position.

The platform 26 is movable relative to the housing 24 in a range of positions comprising a raised position and a lowered position. In the lower position, the platform 26 is closer to the track 8 than in the raised position, when the housing 24 is slidably mounted on the track 8. In other words, the vertical level of the upper surface 32 can be adjusted by raising or lowering the platform 26 relative to the housing 24.

The platform 26 translates relative to the housing 24 in a vertical direction perpendicular to the longitudinal axis X, when the carriage 4 is slidably mounted on the track 8.

The housing 24 comprises four side panels 44a-d, including two transverse panels 44a, 44b perpendicular to longitudinal axis X and two longitudinal panels 44c, 44d parallel to axis X. The four side panels of the housing 24 are surrounded by the four side panels of the platform 26, respectively.

The four side panels 44a-d define therebetween an inner cavity opened at its top. The top panel 30 covers the top opening of said inner cavity.

Now turning to **figure 4a****,** each of the two longitudinal panels 44c-d defines a first longitudinal slot 46 and a second longitudinal slot 48. The first longitudinal slot 46 and the second longitudinal slot 48 are aligned and extend in a direction parallel to longitudinal axis X when the carriage is slidably mounted on the track 8.

The carriage 4 comprises a scissors mechanism 50 which links the housing 24 to the platform 26. The scissors mechanism 50 prevents the platform 26 from rotating relative to the housing 24. In other words, the scissors mechanism 50 ensures the upper surface 32 is parallel to the longitudinal axis X whatever the level of the platform 26 relative to the housing 24, between the lowered position and the raised position.

The scissors mechanism is in the inner cavity of the housing.

The scissors mechanism 50 comprises a first rod 52 pivotally mounted on the platform 26 about a first transverse axis Y1. The first transverse axis Y1 is perpendicular to longitudinal axis X when the carriage 4 is slidably mounted on the track 8.

The first rod 52 comprises two pins 54. Each pin 54 engages a first longitudinal slot 46. Each pin 54 is arranged to slide in the corresponding slot 46 when the first rod 52 pivots about the first transverse axis Y1.

The scissors mechanism 50 further comprises a second rod 56 pivotally mounted on the housing 24 about a second transverse axis Y2 parallel to the first transverse axis Y1 and pivotally mounted on the first rod 52. The second rod 56 is connected to a middle portion of the first rod 52 extending between the first transverse axis Y1 and the pins 54.

The scissors mechanism 50 further comprises a third rod 58 pivotally mounted on the platform 26 about a third transverse axis Y3. The third transverse axis Y3 is parallel to the first transverse axis Y1. The third rod 58 comprises two pins 60. Each pin 60 a second longitudinal slot 48. Each pin 60 is arranged to slide in the corresponding slot 48 when the third rod 58 pivots about the third transverse axis Y3.

The scissors mechanism 50 further comprises a fourth rod 62 pivotally mounted on the housing 24 about a fourth transverse axis Y4 parallel to the third transverse axis Y3 and pivotally mounted on the third rod 58. The second rod 56 is connected to a middle portion of the third rod 58 extending between the third transverse axis Y3 and the pins 60.

When the platform 26 is raised or lowered, the first rod 52 pivots about the first transverse axis Y1, the second rod 56 pivots about the second transverse axis Y2, and each pin 54 slides in the corresponding first longitudinal slot 54 parallel to longitudinal axis X. Simultaneously, the third rod 58 pivots about the third transverse axis Y3, the fourth rod 62 62 pivots about the fourth transverse axis Y4, and each pin 60 of the third rod 58 slides in the corresponding second longitudinal slot 48 parallel to longitudinal axis X.

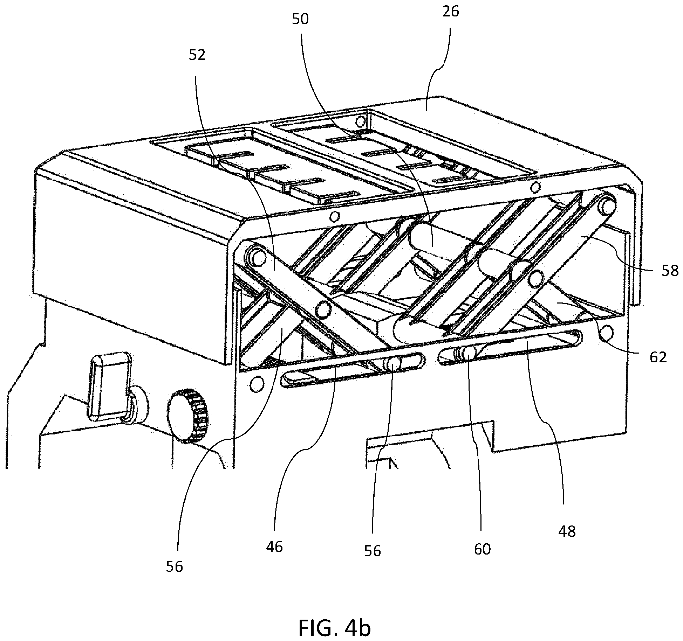

When the platform 26 is raised (as shown in **figure 4a****),** the pins 54 of the first rod 52 move away from the pins 60 of the third rod 58. When the platform 26 is lowered (as shown in **figure 4b****),** the pins 54 of the first rod 52 and the pins 60 of the third rod 58 get closer to each other.

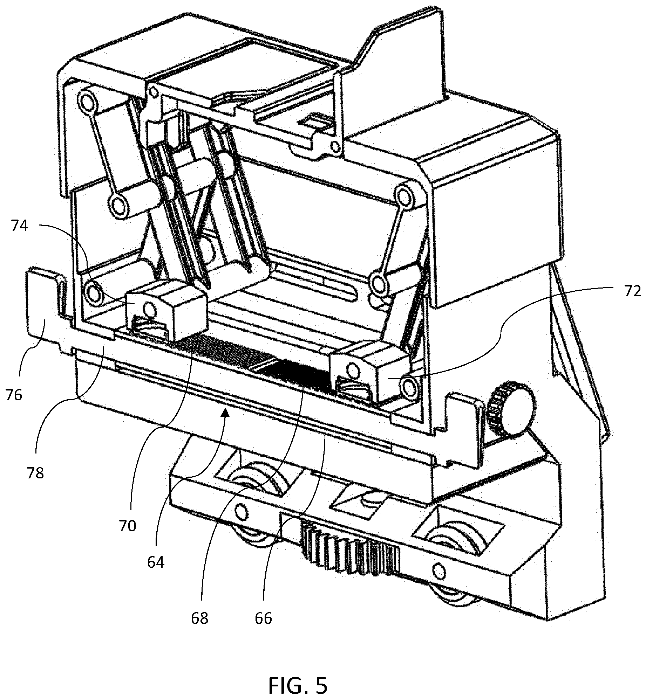

In reference with **figure 5****,** the carriage 4 further comprises a ratchet 64 able to be set in an engaged configuration and in a disengaged configuration.

In the engaged configuration (shown in figure 5), the ratchet 64 allows the platform 26 to be moved from the lowered position to the raised position and prevents the platform 26 to be moved from the raised position to the lowered position.

In the disengaged configuration, the ratchet 64 allows the platform 26 to be moved from the lowered position to the raised position and allows the platform 26 to be moved from the raised position to the lowered position.

The ratchet 64 is located in the housing 24. The scissors mechanism 50 is arranged between the stops 34, 42 and the ratchet 64. When the carriage 4 is slidably mounted on the track 8, the ratchet 64 is between the track 8 and the scissors mechanism 50.

The ratchet 64 comprises a toothed element 66.

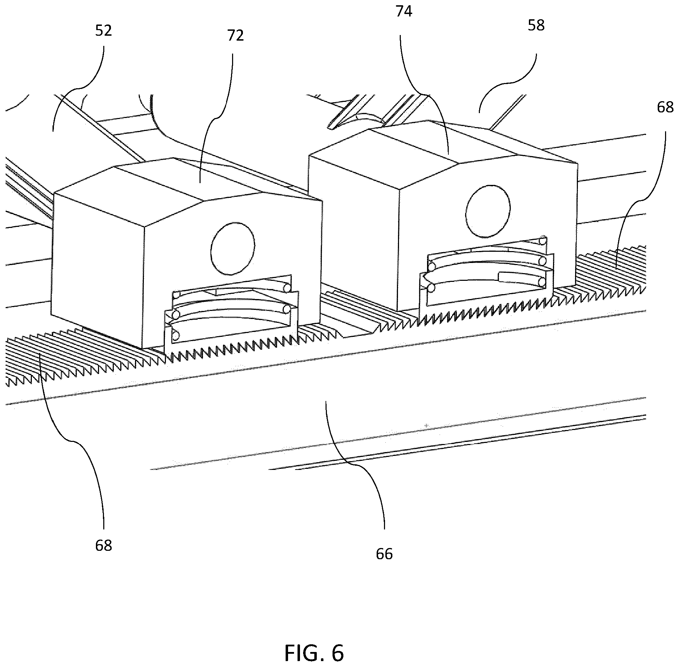

The toothed element 66 is a linear rack. The linear rack 66 comprises a first series of teeth 38, which are asymmetrical as shown in **figure 6****.** The linear rack 12 further comprises a second series of teeth 70, which are asymmetrical but oriented differently from the first series of teeth 68. The first series of teeth 68 and the second series of teeth 70 are actually oriented in two opposite directions.

The ratchet 64 further comprises a first pawl 72. The first pawl 72 is pivotally mounted on a shaft of the first rod 52 which is aligned with the pins 56. The first pawl 72 comprises spring-loaded teeth arranged to engage the first series of teeth 68 when the ratchet 64 is in the engaged configuration.

The ratchet 64 further comprises a second pawl 74. The second pawl 74 is pivotally mounted on a shaft of the third rod 58 which is aligned with the pins 60. The first pawl 72 comprises spring-loaded teeth arranged to engage the second series of teeth when the ratchet 64 is in the engaged configuration.

When the ratchet 64 is in the engaged configuration:
- the first pawl 72 is able to move relative to the linear rack 66 in a first direction parallel to longitudinal axis X but not in a second direction opposite to the first direction.
- the second pawl is able to move along the second series of teeth in the second direction but not in the first direction.

Due to the orientation of the first series of teeth 68 and the second series of teeth 70, the first pawl 72 and the second pawl 74 are allowed to move away from each other (thus allowing the scissors mechanism 50 to raise the platform 26) but are prevented from getting closer to each other (thus preventing the scissors mechanism 50 to lower the platform 26), when the ratchet 64 is in the engaged configuration.

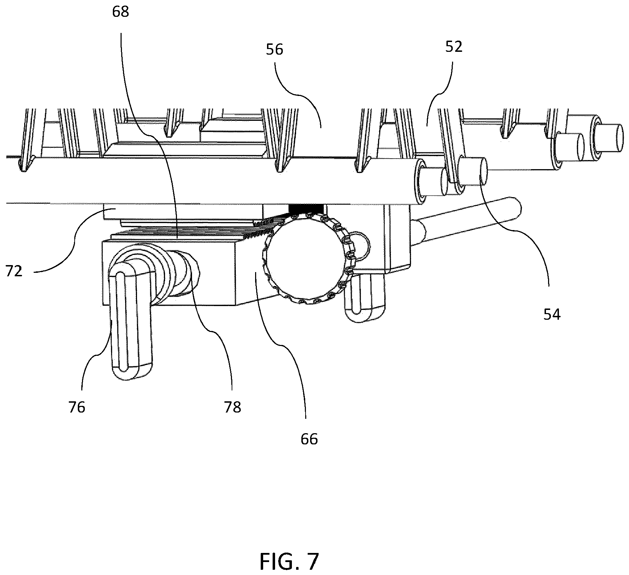

In contrast, when the ratchet 64 is in the disengaged configuration, the linear rack 12 is away from the pawls 72, 74, as shown in **figure 7****.** As a consequence, both pawls 72, 74 are free to move both in the first direction and in the second direction (thus allowing the scissors mechanism 50 to lower and raise the platform 26).

The carriage 4 further comprises a grippable element 76 extending outside the housing 24 and allowing a user to set the ratchet 64 in the engaged configuration and in the disengaged configuration. The grippable element 76 is rotatably mounted on the housing 24.

The grippable element 76 is connected to a cam 78. The cam 78 extends within a hole defined in the linear rack 12. The cam 74 is arranged to move the linear rack 12 away from the pawls or towards the pawls, whenever the grippable element is rotated by a user relative to the housing 24, for instance rotated 180 degrees. The linear rack 66 extends between two parallel walls which constrain it to move vertically whenever the grippable element 76 is rotated.

The carriage 4 further comprises a limiting stopper 80 for adjusting the range of positions of the platform.

In the embodiment shown in figure 7, the limiting stopper 80 is adapted to adjust the upper boundary of this range, i.e. the (maximum) raised position the platform 26 can reach. In other embodiments, the limiting stopper could adjust the lower boundary of this range (i.e. the lowest position of the platform can reach), or both boundaries of this range.

This stopper 80 is arranged in the housing 24 so as to abut against the first rod 52, when the first pawl 72 moves in the first direction, thus blocking further movement of the first pawl 72 in the first direction. The maximum raised position of the platform is reached when the first pawl contacts the stopper 80. In other words, the stopper 80 limits the rotation of the first rod 52 relative to the housing 24, thus the level of the platform 26 can reach when it is raised.

The carriage 4 further comprises a grippable element 82 extending outside the housing 24. Grippable element 82 can be rotated by a user to as to move the position of the limiting stopper in the first direction or in the second direction opposite to the first direction. For that purpose, the grippable element 82 is mechanically coupled to the stopper 80 by means of a thread shaft 84 engaged in a threaded hole defined in the stopper 80. When the limiting stopper 80 is moved in the first direction, the maximum raised position the platform 26 can reach is increased. When the movable stop is moved in the second direction, the maximum raised position the platform 26 can reach is decreased.

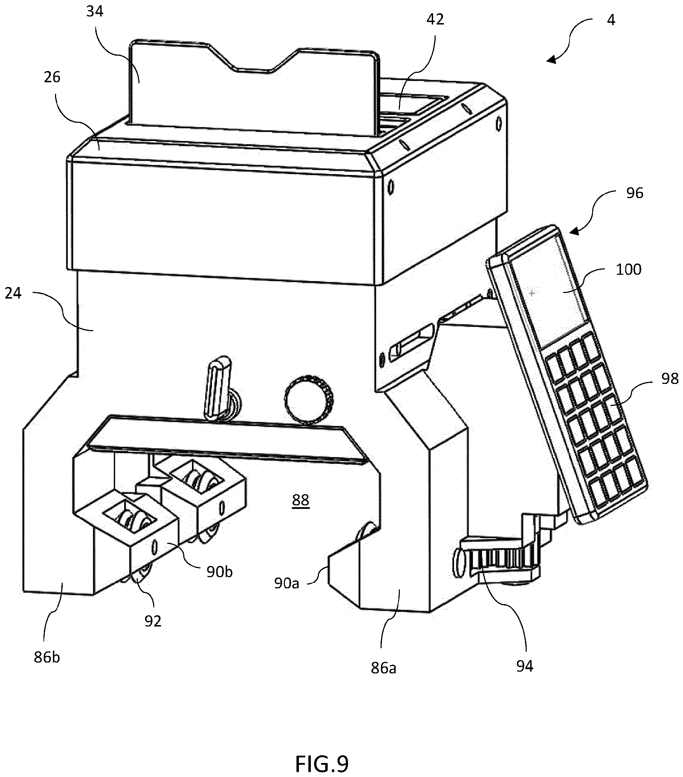

In reference with **figure 9****,** the housing 24 further comprises two legs 86a, 86b defining therebetween a space 88 which can be crossed by the track 8.

The two legs 86a, 86b comprise two protrusions 90a-b facing each other. When the carriage 4 is slidably mounted on the track 8, protrusions 90a extends in one of the longitudinal grooves 10 and the other protrusion 90b extends in the opposite groove 10, in other to stabilize the carriage 4 relative to the track 8.

The carriage 4 further comprises at least one wheel 92 arranged to roll on the track 8. For example, the carriage comprises four wheels 92, including two wheels pivotally mounted on leg 86a and two other wheels pivotally mounted on leg 86b, so as to contact a bottom surface of the track 8.

The carriage 4 further comprises a drive mechanism for sliding the housing 24 relative to the track 8. The drive mechanism comprises a pinion 94 rotatably mounted to the housing 24, and able to engage the rack of the track 8. The pinion 94 mounted on leg 86a.

The drive mechanism further comprises a motor configured to drive the pinion. Since the motor is included in the carriage 4, the carriage 4 is able to move along the track 8 in an autonomous manner, which is advantageous. This contrasts with carriages driven by external means such that a belt.

The carriage 4 further comprises a power supply configured to supply the motor with power.

The carriage 4 further comprises an input interface 96 for receiving data representing a length of an object to be cut by the cutting device 14. The input interface 96 comprises a keypad 98 allowing a user to input said data. The input interface may further comprise a display screen 100 for displaying the data inputted by the user.

The keypad 98 and/or the display screen 100 is rotatable relative to the housing 24 when the detachable unit is mounted to the housing 24, about a horizontal axis.

The input interface may further comprise a radio antenna for communicating with a user terminal wirelessly. This antenna can then receive said data when it is sent by the user terminal.

The carriage 4 further comprises a controller configured to determine from said data a target position of the carriage 4 relative to the track 8 wherein a distance between the stop 34 and the cutting device 14 equals to the length, and control the drive mechanism so as to move the carriage 4 into the determined target position.

The carriage 4 comprises a detachable unit which can be releasably mounted to the housing 24.

The detachable unit includes at least one of the following components of the carriage 4: the input interface 96, the power supply and the controller.

The system described above can be used as follows to cut an object W at a desired length L.

In a preliminary step, the system 1 is installed: the carriage 4 is slidably mounted on the track 8, such that protrusions 90a-b extend in the longitudinal grooves 10 of the track 8 and such that pinion 94 engages the linear rack 12. Besides, the cutting device 14 is mounted as well on the track 8 by means of fasteners 16.

Then, a user inputs the desired length L in the carriage 4 using the input interface 96, for example by means of the keypad 98. The controller receives the inputted length L and determines from it a target position of the carriage 4 relative to the track 8. The controller controls the drive mechanism so as to move the carriage 4 into the target position. The carriage 4 slides along the track 8 by means of the rack-and-pinion system formed by rack 12 and pinion 94.

Once the carriage 4 has reached the target position, the user unfolds stop 34 such that the inner surface 40 faces the cutting device 1. When the carriage 4 is in the target position, the distance between the vertical plane wherein the inner surface 40 extends and the vertical plane wherein the saw 18 extends is equal to the desired length L, as shown in **figure 1****.**

A user can then lay an object W on the platform 26 of the carriage 4 and on the platform 26 of the cutting device 14 simultaneously, and abut the object W against the inner surface 40 of standing flap 36. The stop 34 advantageously allows to better control the horizontal position of the object relative to the cutting device 1 since it prevents the object W to move away from the cutting device 1.

At this stage, the upper surface 32 of the carriage 4 and of the upper surface 22 of the cutting device 14 may not be at the exact same vertical level, which may make the object W unstable. To overcome this issue, a user can raise or lower the platform 26 of the carriage 4, such that the upper surface 32 of the carriage 4 and of the upper surface 22 of the cutting device 14 are at the exact same vertical level.

To raise the platform 26, a user rotates the grippable element 76 so as to set the ratchet 64 in the engaged configuration. Then the user seizes the platform 26 manually and move it upwards. When doing so, the scissors mechanism 50 is vertically expanded and the first pawl 72 and the second pawl 74 move away from each other: the first pawl 72 moves in the first direction (away from the cutting device 14) while the second pawl 74 moves in the second direction (towards the cutting device 14). When the user releases the platform 26, the platform 26 is prevented to lower back thanks to the ratchet 64.

To lower the platform 26, the user rotates the grippable element 76 so as to set the ratchet 64 in the disengaged configuration. As a consequence, the two pawls 72, 74 are free to move towards each other and the platform 26 naturally falls under the effect of gravity.

Once platforms 20, 26 are perfectly aligned, the object can be cut using the saw 18.

Later, the user can replace the cutting device 1 by another cutting device having a different structure or size. In this case, the user may have to lower or raise the platform 26 as explained before to align it with the cutting platform of the other cutting device.

## Claims

1. A carriage (4) comprising:
a housing (24) able to be slidably mounted on a track (8),
a platform (26) on which can rest an object to be cut by a cutting device (14) mounted on the track (8),
a stop (34) able to stop the object relative to the cutting device (14) while the object rests on the platform (26), and configured to be set in either a deployed position or a retracted position, wherein in said deployed position, the stop (34) protrudes from the platform (26), so as to stop the object relative to the cutting device (14) while the object rests on the platform (26), and wherein in said retracted position, the stop (34) is retracted in the platform (26) and is prevented to stop the object,
wherein the platform (26) is movable relative to the housing (24) in a range of positions comprising:
a raised position, and
a lowered position wherein the platform (26) is closer to the track than in the raised position, when the housing (24) is slidably mounted on the track (8), and
**characterized in that** the carriage further comprises a ratchet (64) able to be set in an engaged configuration and in a disengaged configuration, wherein the ratchet (64) allows the platform (26) to be moved from the lowered position to the raised position and prevents the platform (26) to be moved from the raised position to the lowered position.

2. The carriage (4) of claim 1, wherein the stop (34) comprises a flap (36) pivotally mounted on the platform (26) between:
a standing position wherein the flap (36) is perpendicular to the platform 26,
a lying position wherein the flap (36) lies along the platform (26).

3. The carriage (4) of claim 2, wherein the ratchet is able to be set in a disengaged configuration wherein the ratchet allows the platform (26) to be moved from the lowered position to the raised position and allows the platform (26) to be moved from the raised position to the lowered position.

4. The carriage (4) of claim 3, comprising a grippable element (76) allowing a user to set the ratchet (64) in the engaged configuration and in the disengaged configuration.

5. The carriage of any previous claim, wherein:
the ratchet (64) comprises a toothed element (66) and a pawl (72, 74) configured to engage the toothed element (66),
a cam (78) arranged to move the toothed element (66) away from the pawl or towards the pawl, whenever the grippable element (76) is rotated relative to the housing (24).

6. The carriage (4) of any previous claim, further comprising a limiting stopper (80) for adjusting the range of positions.

7. The carriage (4) of any previous claim, further comprising a scissors mechanism (50) which links the housing (24) to the platform (26).

8. The carriage (4) of any previous claim, wherein the housing (24) extends between the platform (26) and the track (8), when the housing (24) is slidably mounted on the track (8).

9. The carriage (4) of any previous claim, further comprising a drive mechanism for sliding the housing (24) relative to the track (8), wherein the drive mechanism comprises:
a pinion (94) rotatably mounted to the housing (24), and able to engage a rack (12) of the track,
a motor configured to drive the pinion (94).

10. The carriage (4) of any previous claim, further comprising
a drive mechanism for sliding the housing (24) relative to the track (8),
an input interface (96) for receiving data representing a length of the object,
a controller configured to:
determine from the data a target position of the carriage (4) relative to the track (8) wherein a distance between the stop (34) and the cutting device (14) equals to the length, and
control the drive mechanism so as to move the carriage (4) into the target position.

11. The carriage (4) of claim 10, wherein
the drive mechanism is included in the housing (24), and
the input interface (96) and/or the controller is included in a detachable unit which is releasably mounted to the housing 24.

12. The carriage (4) of claim 11, wherein the detachable unit includes a power supply configured to supply the motor with power.

13. A system (1) comprising:
a track (8),
a carriage (4) according to any one of the preceding claims.

## Patentansprüche

1. Wagen (4), umfassend:
ein Gehäuse (24), das verschiebbar auf einer Schiene (8) montiert werden kann,
eine Plattform (26), auf der ein Gegenstand liegen kann, der von einer auf der Schiene (8) montierten Schneidvorrichtung (14) geschnitten werden soll,
einen Anschlag (34), der den Gegenstand relativ zu der Schneidvorrichtung (14) stoppen kann, während der Gegenstand auf der Plattform (26) liegt, und der so konfiguriert ist, dass er entweder in eine ausgefahrene oder eine eingefahrene Position eingestellt werden kann, wobei der Anschlag (34) in der ausgefahrenen Position von der Plattform (26) hervorsteht, um den Gegenstand relativ zu der Schneidvorrichtung (14) zu stoppen, während der Gegenstand auf der Plattform (26) liegt, und wobei der Anschlag (34) in der eingefahrenen Position in die Plattform (26) eingefahren ist und daran gehindert wird, den Gegenstand zu stoppen;
wobei die Plattform (26) relativ zu dem Gehäuse (24) in einen Bereich von Positionen beweglich ist, der umfasst:
eine erhöhte Position und
eine abgesenkte Position, worin sich die Plattform (26) näher an der Schiene befindet als in der angehobenen Position, wenn das Gehäuse (24) verschiebbar auf der Schiene (8) montiert ist, und
**dadurch gekennzeichnet, dass** der Wagen weiter eine Ratsche (64) umfasst, die in eine eingerückte Konfiguration und in eine ausgerückte Konfiguration eingestellt werden kann, wobei die Ratsche (64) ermöglicht, dass die Plattform (26) von der abgesenkten Position in die angehobene Position bewegt wird, und verhindert, dass die Plattform (26) von der angehobenen Position in die abgesenkte Position bewegt wird.

2. Wagen (4) nach Anspruch 1, wobei der Anschlag (34) eine Klappe (36) umfasst, die schwenkbar auf der Plattform (26) montiert ist zwischen:
einer stehenden Position, worin die Klappe (36) senkrecht zur Plattform (26) steht,
einer liegenden Position, worin die Klappe (36) entlang der Plattform (26) liegt.

3. Wagen (4) nach Anspruch 2, wobei die Ratsche in eine ausgerückte Konfiguration eingestellt werden kann, worin die Ratsche ermöglicht, dass die Plattform (26) von der abgesenkten Position in die angehobene Position bewegt wird, und ermöglicht, dass die Plattform (26) von der angehobenen Position in die abgesenkte Position bewegt wird.

4. Wagen (4) nach Anspruch 3, der ein griffiges Element (76) umfasst, das einem Benutzer ermöglicht, die Ratsche (64) in die eingerückte Konfiguration und in die ausgerückte Konfiguration einzustellen.

5. Wagen nach einem vorstehenden Anspruch, wobei:
die Ratsche (64) ein gezahntes Element (66) und eine Sperrklinke (72, 74) umfasst, die so konfiguriert ist, dass sie in das gezahnte Element (66) eingreift,
eine Nocke (78), die dazu angeordnet ist, das gezahnte Element (66) von der Sperrklinke weg oder zu der Sperrklinke hin zu bewegen,
wenn das griffige Element (76) relativ zum Gehäuse (24) gedreht wird.

6. Wagen (4) nach einem vorstehenden Anspruch, der weiter einen Begrenzungsstopper (80) zum Einstellen des Positionsbereichs umfasst.

7. Wagen (4) nach einem vorstehenden Anspruch, der weiter einen Scherenmechanismus (50) umfasst, der das Gehäuse (24) mit der Plattform (26) verbindet.

8. Wagen (4) nach einem vorstehenden Anspruch, wobei sich das Gehäuse (24) zwischen der Plattform (26) und der Schiene (8) erstreckt, wenn das Gehäuse (24) verschiebbar auf der Schiene (8) montiert ist.

9. Wagen (4) nach einem vorstehenden Anspruch, der weiter einen Antriebsmechanismus zum Verschieben des Gehäuses (24) relativ zur Schiene (8) umfasst, wobei der Antriebsmechanismus umfasst:
ein Ritzel (94), das drehbar am Gehäuse (24) montiert ist und in eine Zahnstange (12) der Schiene eingreifen kann,
einen Motor, der zum Antreiben des Ritzels (94) konfiguriert ist.

10. Wagen (4) nach einem vorstehenden Anspruch, weiter umfassend
einen Antriebsmechanismus zum Verschieben des Gehäuses (24) relativ zur Schiene (8),
eine Eingangsschnittstelle (96) zum Empfangen von Daten, die eine Länge des Objekts darstellen,
eine Steuereinheit, die konfiguriert ist zum:
Bestimmen, aus den Daten, einer Zielposition des Wagens (4) relativ zur Schiene (8), wobei ein Abstand zwischen dem Anschlag (34) und der Schneidvorrichtung (14) gleich der Länge ist, und
Steuern des Antriebsmechanismus, um den Wagen (4) in die Zielposition zu bewegen.

11. Wagen (4) nach Anspruch 10, wobei
der Antriebsmechanismus im Gehäuse (24) beinhaltet ist, und
die Eingabeschnittstelle (96) und/oder die Steuereinheit in einer abnehmbaren Einheit beinhaltet ist, die lösbar am Gehäuse (24) montiert ist.

12. Wagen (4) nach Anspruch 11, wobei die abnehmbare Einheit eine Stromversorgung beinhaltet, die dazu konfiguriert ist, den Motor mit Strom zu versorgen.

13. System (1), umfassend:
eine Schiene (8),
einen Wagen (4) nach einem der vorstehenden Ansprüche.

## Revendications

1. Chariot (4) comprenant :
un logement (24) pouvant être monté de façon coulissante sur un rail (8),
une plate-forme (26) sur laquelle peut reposer un objet destiné à être coupé par un dispositif de coupe (14) monté sur le rail (8),
une butée (34) capable d'arrêter l'objet par rapport au dispositif de coupe (14) alors que l'objet repose sur la plate-forme (26), et configurée pour être placée soit dans une position déployée, soit dans une position rétractée, dans lequel, dans ladite position déployée, la butée (34) fait saillie à partir de la plate-forme (26), de manière à arrêter l'objet par rapport au dispositif de coupe (14) alors que l'objet repose sur la plate-forme (26), et dans lequel, dans ladite position rétractée, la butée (34) est rétractée dans la plate-forme (26) et est empêchée d'arrêter l'objet ;
dans lequel la plate-forme (26) est mobile par rapport au logement (24) dans une plage de positions comprenant :
une position levée, et
une position abaissée dans laquelle la plate-forme (26) est plus proche du rail que dans la position levée, lorsque le logement (24) est monté de façon coulissante sur le rail (8), et
**caractérisé en ce que** le chariot comprend en outre un rochet (64) capable d'être mis dans une configuration en prise et dans une configuration non en prise, dans lequel le rochet (64) permet à la plateforme (26) d'être déplacée de la position abaissée à la position levée et empêche la plateforme (26) d'être déplacée de la position levée à la position abaissée.

2. Chariot (4) selon la revendication 1, dans lequel la butée (34) comprend un volet (36) monté de façon pivotante sur la plate-forme (26) entre :
une position verticale dans laquelle le volet (36) est perpendiculaire à la plate-forme (26),
une position horizontale dans laquelle le volet (36) repose le long de la plate-forme (26).

3. Chariot (4) selon la revendication 2, dans lequel le rochet peut être mis dans une configuration désolidarisée dans laquelle le rochet permet à la plate-forme (26) d'être déplacée de la position abaissée à la position levée et permet à la plate-forme (26) d'être déplacée de la position levée à la position abaissée.

4. Chariot (4) selon la revendication 3, comprenant un élément préhensible (76) permettant à un utilisateur de mettre le rochet (64) dans la configuration en prise et dans la configuration désolidarisée.

5. Chariot selon une quelconque revendication précédente, dans lequel :
le rochet (64) comprend un élément denté (66) et un cliquet (72, 74) configuré pour entrer en prise avec l'élément denté (66),
une came (78) conçue pour déplacer l'élément denté (66) loin du cliquet ou vers le cliquet,
chaque fois que l'élément préhensible (76) est tourné par rapport au logement (24).

6. Chariot (4) selon une quelconque revendication précédente, comprenant en outre une butée de limitation (80) pour régler la plage de positions.

7. Chariot (4) selon une quelconque revendication précédente, comprenant en outre un mécanisme à ciseaux (50) qui relie le logement (24) à la plate-forme (26).

8. Chariot (4) selon une quelconque revendication précédente, dans lequel le logement (24) s'étend entre la plate-forme (26) et le rail (8), lorsque le logement (24) est monté de façon coulissante sur le rail (8).

9. Chariot (4) selon un quelconque revendication précédente, comprenant en outre un mécanisme d'entraînement pour faire coulisser le logement (24) relativement au rail (8), dans lequel le mécanisme d'entraînement comprend :
un pignon (94) monté de façon rotative sur le logement (24), et capable d'entrer en prise avec une crémaillère (12) du rail,
un moteur configuré pour entraîner le pignon (94).

10. Chariot (4) selon une quelconque revendication précédente, comprenant en outre
un mécanisme d'entraînement destiné à faire coulisser le logement (24) par rapport au rail (8),
une interface d'entrée (96) destinée à recevoir des données représentant une longueur de l'objet,
un dispositif de commande configuré pour :
déterminer, à partir des données, une position cible du chariot (4) par rapport au rail (8), dans lequel une distance entre la butée (34) et le dispositif de coupe (14) est égale à la longueur, et
commander le mécanisme d'entraînement de manière à déplacer le chariot (4) jusque dans la position cible.

11. Chariot (4) selon la revendication 10, dans lequel
le mécanisme d'entraînement est inclus dans le logement (24), et
l'interface d'entrée (96) et/ou le dispositif de commande sont inclus dans une unité détachable qui est montée de façon amovible sur le logement (24).

12. Chariot (4) selon la revendication 11, dans lequel l'unité détachable inclut une alimentation électrique configurée pour alimenter le moteur en électricité.

13. Système (1), comprenant :
un rail (8),
un chariot (4) selon l'une quelconque des revendications précédentes.
